(19)

Europäisches Patentamt
European Patent Office
Office européen des brevets

(11) **EP 4 540 637 B1**

(12) **EUROPEAN PATENT SPECIFICATION**

(45) Date of publication and mention
of the grant of the patent:
**22.07.2026 Bulletin 2026/30**

(21) Application number: **23738417.7**

(22) Date of filing: **15.06.2023**

(51) International Patent Classification (IPC):
***G01V 8/20*** *(2006.01)*

(52) Cooperative Patent Classification (CPC):
**G01V 8/20**

(86) International application number:
**PCT/EP2023/066100**

(87) International publication number:
**WO 2023/242333 (21.12.2023 Gazette 2023/51)**

(54) **OBJECT DETECTION APPARATUS AND METHOD**

OBJEKTDETEKTIONSVORRICHTUNG UND -VERFAHREN

APPAREIL ET PROCÉDÉ DE DÉTECTION D'OBJET

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.06.2022 GB 202208785**

(43) Date of publication of application:
**23.04.2025 Bulletin 2025/17**

(73) Proprietor: **E Track Ltd**
**Solihull**
**B91 3QG (GB)**

(72) Inventors:
 • **SLANEY-SMITH, Adam**
**Solihull B91 3QG (GB)**
 • **WOODFIELD, David**
**Bloxwich WS3 3RX (GB)**
 • **PAGE, Alan**
**Rubery B45 9UY (GB)**
 • **COMLEY, Richard**
**Solihull B91 3QG (GB)**
 • **RATHBONE, David**
**Solihull B91 3QG (GB)**

(74) Representative: **Sanger, Phillip Simon**
**GWIP Ltd t/a Grey Wolf IP**
**1 Mill Street**
**Leamington Spa, Warwickshire CV31 1ES (GB)**

(56) References cited:
**EP-A2- 2 037 296          WO-A1-2008/152826
WO-A1-2021/130346      CA-A1- 2 399 899
DE-A1- 102015 007 354   IT-A1- MI20 100 792
JP-A- 2009 203 726        US-A- 5 319 216**

## Description

### Technical Field

The present invention is concerned with an apparatus and method for detecting a physical object. More specifically, the present invention is concerned with an apparatus for detection of an object by disruption of a beam of electromagnetic energy.

### Background Art

Detection of physical objects using beams of EM energy (specifically light, and more specifically infra-red light) is well known. Such systems comprise an emitter and a receiver. The emitter is capable of emitting a focussed beam of IR light towards the receiver. Upon the emitted light hitting the receiver (which comprises a suitable photosensitive element) the detector can confirm the presence of the beam by altering an electrical signal. If the beam of light is interrupted or disturbed by an object, the detector no longer receives the light, and the signal is interrupted. This system is used for a variety of applications- for example detection of people or objects.

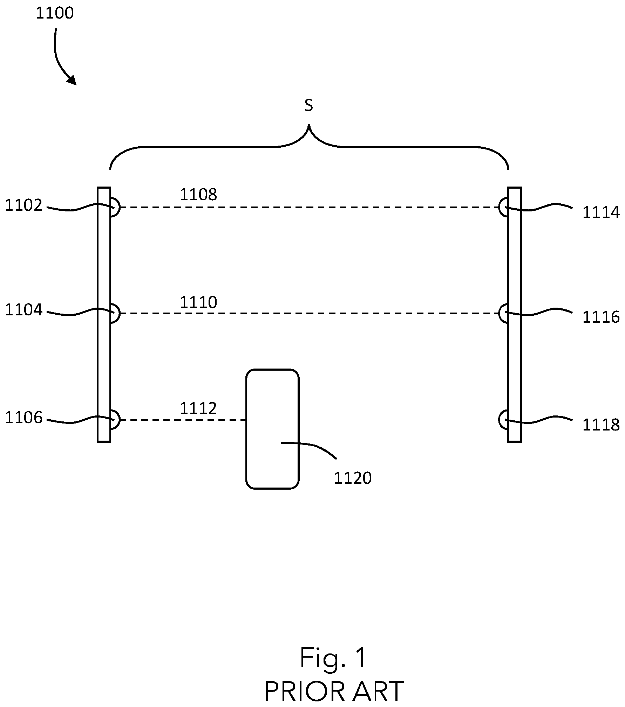

Figure 1 shows a prior art system 1100 for detection of an object within a space S. Three emitters 1102, 1104, 1106 are provided aligned in a linear fashion on a first side of the space S. Each is configured to emit a beam of IR light 1108, 1110, 1112 respectively towards a respective receiver 1114, 1116, 1118. Th beams 1108, 1110, 1112 are parallel and operated in a one-beam / one emitter / one receiver configuration. An object 1120 has moved into the space S, and interrupted the beam 1112 from reaching the receiver 1118. A suitable electrical detection circuit connected to the photosensitive receiver 1118 can therefore detect the presence of the object 1120.

A problem with this type of detector is that the presence of non-uniform objects becomes problematic. There are gaps between the beams, and as such the coverage is sub-optimal.

EP2037296A2 discloses a light grid for the monitoring of an area.

It is an aim of the present invention to mitigate the problems with the prior art.

### Summary of Invention

According to a first aspect of the present invention there is provided an object detection apparatus according to claim 1 and a method of detecting the presence or absence of an object according to claim 15.

By "detection space" we mean either a volume (a three-dimensional space) or a plane (a two-dimensional space).

By "object" we mean any object including living things such as humans.

Advantageously, using the detectors to detect the light from multiple emitters allows the detection space to be covered more comprehensively for irregular shaped objects which may otherwise escape detection.

Further, because perfect alignment of the emitters and receivers is not required, such systems installation is made more straightforward in retrofit situations. For example, if the system needs to be installed in an existing detection space, it can be provided in two parts with the transmitter post and receiver post being separate. So, for example, an installation at a doorway may comprise two strips and a controller. There would be an amount of tolerance provided, and / or a calibration process. The lack of a requirement for perfect alignment means that installation is made much easier.

Preferably each emitter and detector is part of more than one emitter /detector pair, and wherein the controller cycles through emitter / detector pairs to determine the presence of an objection in the detection space.

In one preferred embodiment, the apparatus has an "active" and "standby" state. In the former state, the controller cycles through emitter / detector pairs to determine the presence of an objection in the detection space. In the standby state, the controller does not cycle through the emitter-detector pairs. The standby state mat be utilised when, for example, an exterior door or other closure to the system is closed and / or locked (preventing access to the key and fob).

Preferably the controller is configured to cycle through at least two of the plurality of emitters whilst monitoring one of the plurality of detectors.

Preferably the controller is configured to cycle through at least two of the plurality of detectors whilst monitoring one of the plurality of emitters.

Preferably the emitters and detectors each have an optical axis, wherein the emitters and detectors are arranged such that their optical axes are parallel and offset.

Preferably the plurality of detectors are mounted on a first member on a first side of the detection space, and the plurality of emitters are mounted on a second member on a second side of the detection space.

Preferably the first member and the second member are flat and parallel.

Preferably the distance between each detector and at least two closest emitters is the same. Preferably only the closest emitter / detector pairs are polled.

Preferably the emitters and detectors are arranged in a grid pattern viewed normal to the first and second members.

Preferably there is a third member positioned on the opposite side of the second member to the first member, wherein a further detection space is defined between the second member and the third member, and wherein a further plurality of emitters is located on the second member, and a further plurality of detectors is located on the third member, and the controller is configured to detect the presence of an object in the further detection space by using each of the further plurality of detectors to detect light emitted by at least two of the further plurality of emitters.

Preferably the controller is configured to detect the presence of an object in the detection space by using each of the plurality of detectors to detect light emitted by adjacent emitters of the plurality of emitters.

Preferably there is provided a visual sensor configured to generate an image of the object in the detection space.

Preferably the visual sensor is activated upon detection of an object by the emitters and detectors.

Preferably there is provided a computer comprising software configured to analyse the generated image and to determine whether the detected object meets at least one predetermined criterion.

Preferably the at least one predetermined criterion includes at least one of:

object shape;

object size;

object colour.

The invention also provides a key storage apparatus comprising:

a key mount for mounting a key such that the key hangs;

an object detection apparatus according to the first aspect, the detection space positioned below the key mount such that the apparatus can detect the presence or absence of a key attached to the key mount.

Preferably the key mount is a key fob receptacle.

Preferably the key fob receptable comprises a fob detector for detecting the presence or absence of a key fob.

Preferably the presence of a key or set of keys is verified by both the fob detector and the object detection apparatus.

Preferably the key fob receptable comprises a fob lock for retaining the key fob in position in the key fob receptacle.

Preferably the controller is configured to verify that the key fob and the key correspond to a key fob-key pair in a database by identifying both the key fob using the fob detector and the key using the image sensor.

Preferably the key fob is identified using the fob detector, and the corresponding key verified against the database, wherein the image sensor it used to check that the key is the key of the key fob-key pair.

According to a second aspect there is provided a method of detecting the presence or absence of an object according to claim 15.

Preferably the at least two light emitters are used to emit light sequentially.

### Brief Description of Drawings

An embodiment of the present invention will now be described with reference to the following figure in which:

FIGURE 1 is a side view of a prior art system;
FIGURE 2 is a perspective view of a first apparatus in accordance with the present invention;
FIGUREs 3 to 5 are detail views of a part of the apparatus of Figure 2;
FIGURE 6 is a system view of the apparatus of Figure 2;
FIGURE 7 is a view of a second embodiment incorporating the first embodiment of Figure 2;
FIGUREs 8a and 8b are views of a third embodiment; and,
FIGURE 9 is a schematic view of a third embodiment incorporating the second embodiment.

### Description of the first embodiment

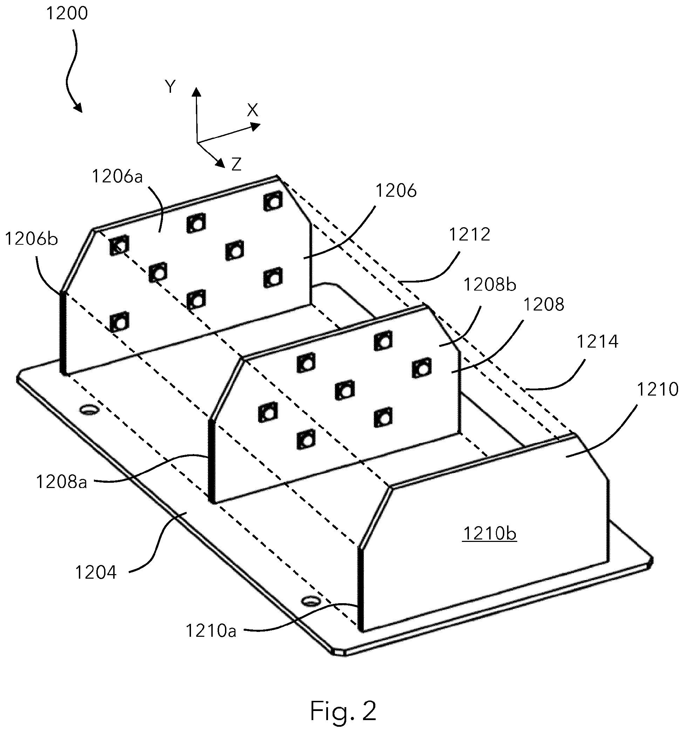

A first apparatus 1200 in accordance with the present invention is shown in Figure 2.

*Configuration*

The apparatus 1200 comprises a frame 1202 having a base plate 1204 and three sensor panels 1206, 1208, 1210 mounted normal thereto. The panels 1206, 1208, 1210 are spaced-apart. A first detection space 1212 is defined as the volume between the panels 1206, 1208, and a second detection space 1214 is defined as the volume between the panels 1210, 1212.

The first panel 1206 has a first side 1206a and a second side 1206b. The second panel 1208 has a first side 1208a and a second side 1208b. The third panel 1210 has a first side 1210a and a second side 1210b.

On the first side 1206a of the first panel 1206 there is provided an array 1216 of receivers. On the first side 1208a of the second panel 1208 there is provided an array 1218 of transmitters. On the second side 1208b of the second panel 1208b there is provided an array 1220 of transmitters. On the first side 1210a of the third panel 1210 there is provided an array 1222 of receivers.

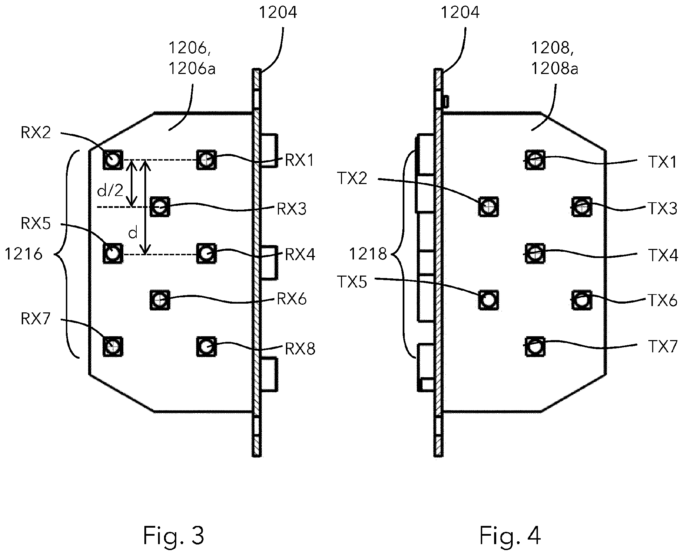

Figure 3 shows a side view of the first side 1206a of the panel 1206. The array 1216 comprises a plurality of receivers RX1 - RX8. The receivers are arranged in three columns (or rows if oriented at 90 degrees to that shown). The first column has three receivers, the second has two and the third, three. The receivers of the first and third columns are aligned. The receivers of the second column are positioned in between those of the first and third columns in a vertical sense. In other words, if the in-column spacing between the receivers is d, then the second column is offset by d/2. In this embodiment, d = 20mm. There are eight receivers. In this embodiment, the receivers are Vishay VEMD2020X01 infrared photodiodes.

A 74HC4051PW,118 8 channel multiplexer is used to enable each photodiode receiver as required. A 10k$\Omega$ sense resistor converts the current to a voltage which is then amplified. First stage amplification is using a common emitter bandpass amplifier, second stage is an op-amp based bandpass filter, both centred on 20kHz.

Figure 4 shows a side view of the first side 1208a of the panel 1208. The array 1218 comprises a plurality of transmitters TX1 - TX7. The transmitters are arranged in three columns (or rows if oriented at 90 degrees to that shown). The first column has two transmitters, the second has three and the third, two. The transmitters of the first and third columns are aligned. The transmitters of the second column are positioned offset from those of the first and third columns in a vertical sense. In other words, if the in-column spacing between the transmitters is d, then the second column is offset by d/2. There are seven transmitters. In this embodiment, the transmitters are VSMB2943GX01 infrared LEDs.

Each LED is enabled using a BC847C transistor. Current flowing in the LED is controlled using 2x 1k$\Omega$ resistors in parallel (500$\Omega$). Current in each LED is:

$$I_{LED} = \frac{(V_{supply} - V_f - V_{ON})}{R}$$

$$I_{LED} = \frac{(12 - 1.35 - 0.15)}{500}$$

$$I_{LED} = 21mA$$

The VSMB2943GX01 has an intensity of 20mW/sr @ 100mA. The gap between the two boards is 6.5cm and each receiver is optically offset from its closest transmitter by 10mm.

The transmission angle is

$$\theta = tan^{-1}\left(\frac{10}{65}\right) \cong 9^0$$

At 9°, the transmitted signal is reduced by approx. 7%. Transmitted intensity

$$I_\theta = \frac{21mA}{100mA} \cdot 20mW/sr \cdot 0.93$$

$$I_{\theta(TX)} = 3.9mW/sr$$

Reverse light current in the VEMD2020X01 photodiode is 12$\mu$A at 1mW/cm$^2$ intensity. Light intensity reduces with the square of distance. The sensitivity of the photodiode is further reduced by approximately 15% at an angle of 9°. The current flowing in the receiver will be

$$I_{\theta(RX)} = \frac{I_{\theta(TX)}.12\mu Acm^{-2}.0.85}{6.5cm^2} = 940\mu A$$

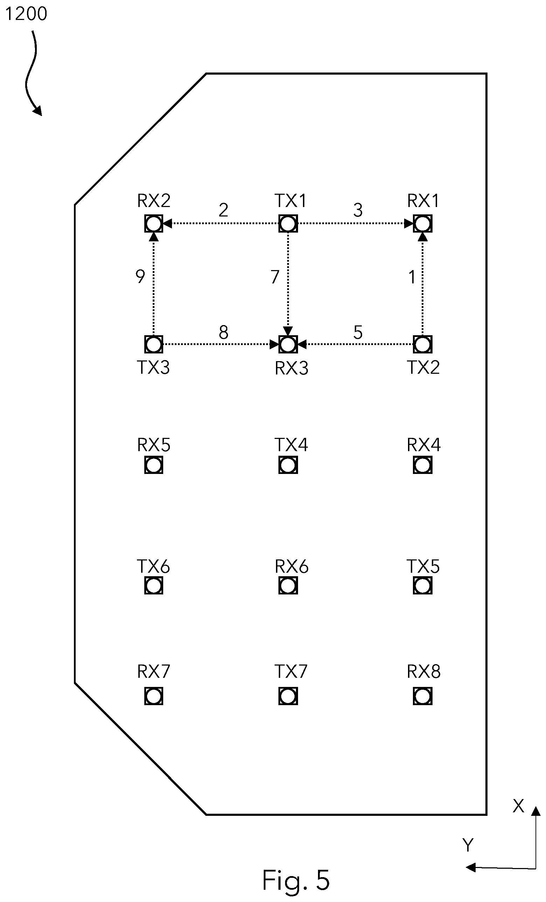

Figure 5 shows the receivers (R) and transmitters (T) overlaid. It can be seen that rather than lying in line / parallel to each other, the transmitters and receivers are interdigitated on the XY plane (i.e., the planes of the panels). They form a regular grid of d/2 x d/2 in the XY plane. The boards are designed such that the optical axes of each transmitter / receiver extend parallel to one another but are offset from one another, either vertically or horizontally.

In this way, each of the receivers can be designed to identify a "positive" receipt of the incident emitted light at the same level of intensity. If any of the receivers were positioned in the direct line of sight (opposite) the transmitters, they would receive light which has not been attenuated by the angle between transmitter and receiver. Therefore the receiver detection circuits (amplifiers and so on) would need to detect a positive across a broader range of amplitudes. This would make the circuits inherently more complex to implement. Therefore, by ensuring that each transmitter is the same distance / angle from multiple receivers (i.e. not directly opposite) provides for a simpler system.

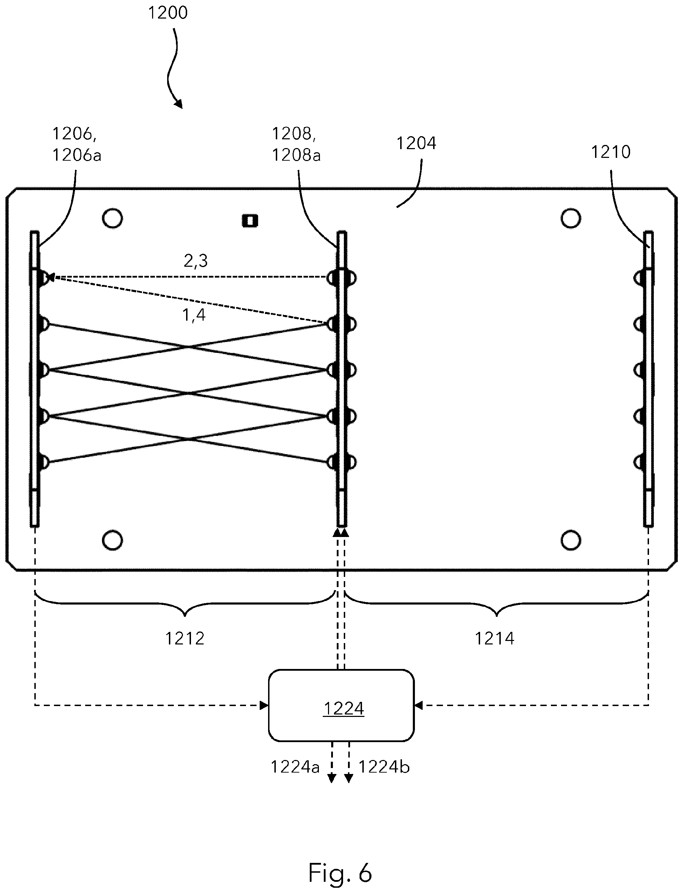

Figure 6 shows the apparatus 1200 connected to a controller 1224. The controller is configured to provide control signals to each of the emitters on either side 1208a, 1208b of the panel, and to receive signals from the receivers on the panels 1206, 1210 as described above. The controller 1224 is configured to provide outputs 1224a, 1224b indicative of the presence of an object in either of the detection spaces 1212, 1214.

*Use*

In use, detectors and emitters are activated in turn. This provides a pattern of beams directed from the panel 1208, across the detection space 1212 to the receivers on the panel 1206. As each beam is emitted, the relevant detector is used to determine whether the corresponding signal has been received. If the signal is not received, an object is reported as detected in the space 1212 (OBSTRUCTED mode). As shown in the table below, the first pair is emitter TX2 with receiver RX1, and so on..

| Beam | Transmitter | Detector |
|------|-------------|----------|
| 1 | TX2 | RX1 |
| 2 | TX1 | RX2 |
| 3 | TX1 | RX1 |
| 4 | TX2 | RX4 |
| 5 | TX2 | RX3 |
| 6 | TX4 | RX3 |
| 7 | TX1 | RX3 |
| 8 | TX3 | RX3 |
| 9 | TX3 | RX2 |
| 10 | TX5 | RX4 |
| 11 | TX4 | RX4 |
| 12 | TX4 | RX5 |
| 13 | TX3 | RX5 |
| 14 | TX6 | RX5 |
| 15 | TX5 | RX6 |
| 16 | TX7 | RX6 |
| 17 | TX4 | RX6 |
| 18 | TX6 | RX6 |
| 19 | TX6 | RX7 |
| 20 | TX7 | RX7 |

(continued)

| Beam | Transmitter | Detector |
|------|-------------|----------|
| 21 | TX7 | RX8 |
| 22 | TX5 | RX8 |

The beam sequence can be modified using the following definitions

```
#define PULSECOUNT                 10      // Number of pulses per beam
#define INTER_BEAM_DELAY           40      // cycle delay between beams @ 40 kHz
#define END_OF_SEQUENCE_DELAY      600     // cycle delay between beams @ 40 kHz
#define MAXBEAMS                   22      // Number of beams in a sequence
#define BEAM_DETECT_THRESHOLD      8       // Pulses detected to confirm beam
#define NUM_CLEAN_SWEEPS           5       // Clean sweep threshold
```

TIMER0 is used to generate a 25μsec tick. The relevant output pin is toggled to generate a 20kHz signal. This is disabled after (PULSECOUNT) cycles. The next TX/RX pair are enabled and after a delay (INTER_BEAM_DELAY), the next beam is generated. At the end of the sequence (MAXBEAMS), after a delay (END_OF_SEQUENCE_DELAY), the sequence repeats.

BEAM_DETECT_THRESHOLD defines the number of pulses which indicate a beam has been received. In this case it is slightly less than the number transmitted to provide limited noise filtering. Should a beam be obstructed and fewer pulses are received, the processor goes into OBSTRUCTED mode and sets the relevant output to HIGH (i.e., an object is present).

In order to exit OBSTRUCED mode, the system needs to see (NUM_CLEAN_SWEEPS) unobstructed sweeps before it will change state. This hysteresis prevents flickering of the output under certain circumstances.

Each detector detects the light from more than one transmitter. Each transmitter emits light for detection between more than one detector. Viewed in the XY plane, the beams create a grid pattern. The beams also have a Z axis component between the arrays. The beams in bold are shown in Figure 5.

If, for example, the emitter TX4 is active (beams 6, 11 & 12), if (when polled) the photoreceivers RX3, RX4 or RX5 show a signal below a predetermined threshold, the presence of an object in the detection space is confirmed by the controller.

## Description of the second embodiment

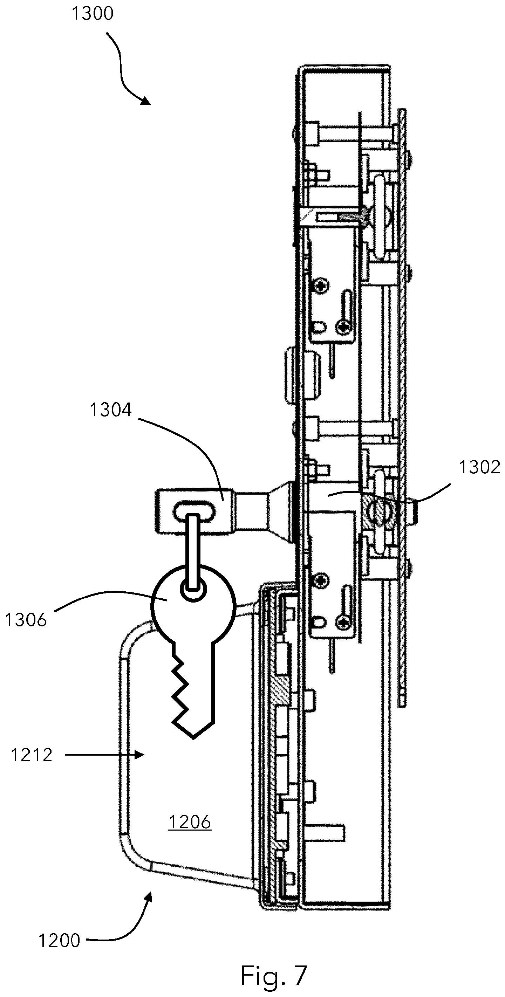

Referring to Figure 7, there is shown a further embodiment in which a key fob receiving apparatus 1300 is provided with the apparatus 1200 of the first embodiment. The apparatus 1300 is (for example) of the type disclosed in the applicant's prior application WO2021/130346. A plurality of key fob receptacles 1302 are provided with detection means configured to detect the presence of a key fob 1304. Locking means are also provided to lock the fob 1304 in position.

As well as the presence of the key fob 1304, it is also useful to detect the presence of a key 1306 or set of keys attached thereto. In this embodiment, the apparatus 1200 is positioned below the fob receptacle with the detection space 1212 located where the key 1306 hangs. Therefore, as well (or instead of) detection of the fob 1304, the system can be configured to detect the keys. This ensures, for example, that the system cannot be fooled by the presence of a fob without keys attached, or if the keys are removed after the fob is inserted.

## Description of the third embodiment

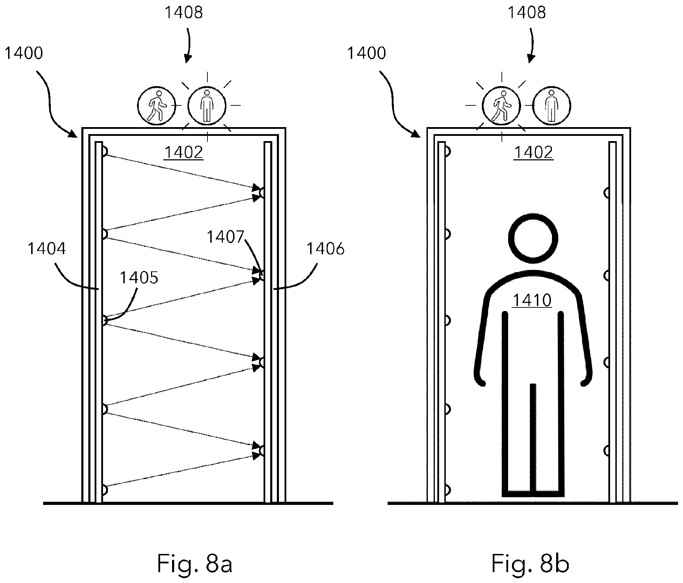

The first and second embodiment are configured to detect the presence or absence of an object in a persistent manner. Referring to Figures 8a and 8b a system 1400 is configured to detect passage of an object passing through a 2D detection space, aperture or doorway 1402.

An emitter array 1404 and receiver array 1406 are provided on either side of the space. In the same manner as the previous embodiments each array comprises a plurality of emitters 1405 or receivers 1407. The emitters and receivers are not aligned but are offset (in a vertical sense) such that passage of light from one emitter can be detected at more than one receiver.

The system 1400 is linked to an access control system in which an indicator 1408 is provided above the doorway 1402. The system is active, and "armed" to detect the presence of an object in the detection space in Figure 8a. In this Figure the indicator 1408 is red and instructs that access is not permitted. If a person attempts to cross the detection space, the system produces a persistent alert (even if they then pass out of the detection space).

When a user 1410 is permitted (e.g. by providing access credentials), the system is "disarmed", the indicator 1408 indicates that the user can pass and the system is configured not to produce an alert. This may be achieved by e.g. deactivating the emitters and receivers, or simply changing the configuration to not produce an alert upon detection.

This solution is particularly useful where physical doors are a hindrance- e.g. in clinical settings.

### Description of the fourth embodiment

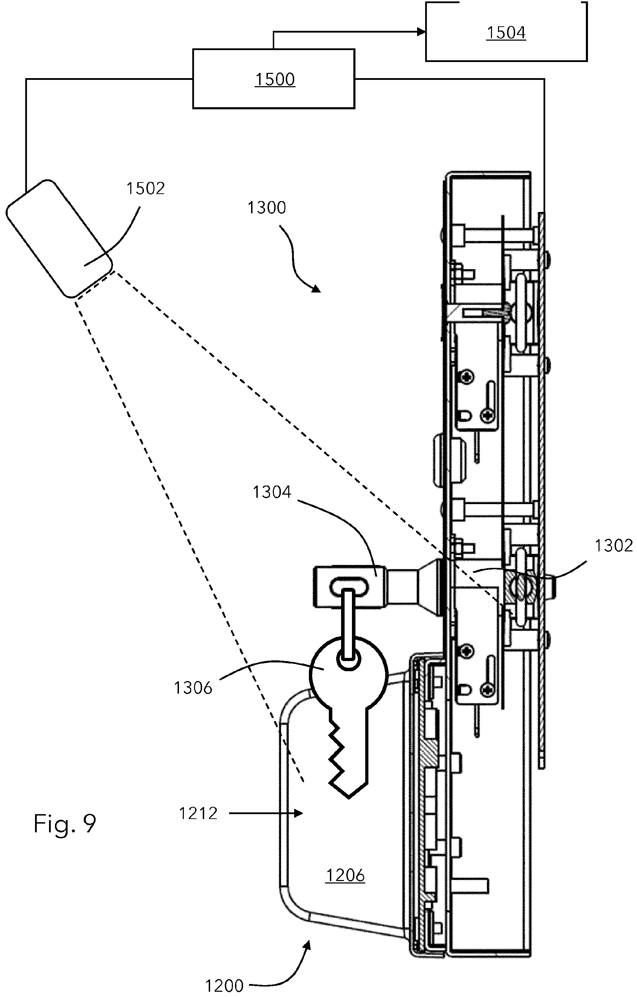

Referring to Figure 9, there is shown a further embodiment in which the key fob receiving apparatus 1300 is provided with a controller 1500, and a visual sensor 1502.

The apparatus 1300 operates as described with respect to Figure 7. When an object is detected (i.e., a key 1306) the apparatus 1300 signals the controller 1500 which in turn activates the visual sensor 1502. The visual sensor then captures an image of the object 1306 which it sends to the controller 1500.

The controller 1500 comprises a computer system having a memory, processor and software with image analysis capability. The controller 1500 is therefore able to identify the object 1306.

In one example, the object 1306 is a vehicle key. The controller 1500 has access to a database of vehicle keys and the fobs 1304 to which they are attached. By identifying the key 1306, the controller 1500 can verify that the correct key has been loaded into the system. This will circumvent attempts to fool the system by e.g., replacing the vehicle key with a different key or other object e.g., a keyring.

The database of vehicle keys may be, for example, a database of key shapes for specific brands or models of vehicle. As such, the system can check whether the correct type of key has been provided (for example a MAN vehicle key).

Once the correct key has been verified, the controller 1500 is configured to send an authorisation signal to a further piece of equipment 1504, which may be (for example) a dock door loading system or similar.

The image analysis software may be based on machine learning (ML). The visual sensor 1502 may be a camera configured to detect light in the human visual range, or another type of image detection apparatus such as an IR camera or LIDAR scanner. The system may be configured to identify the shape of the key, such as the outline, as well as surface decoration such as logos.

*Variations on the fourth embodiment*

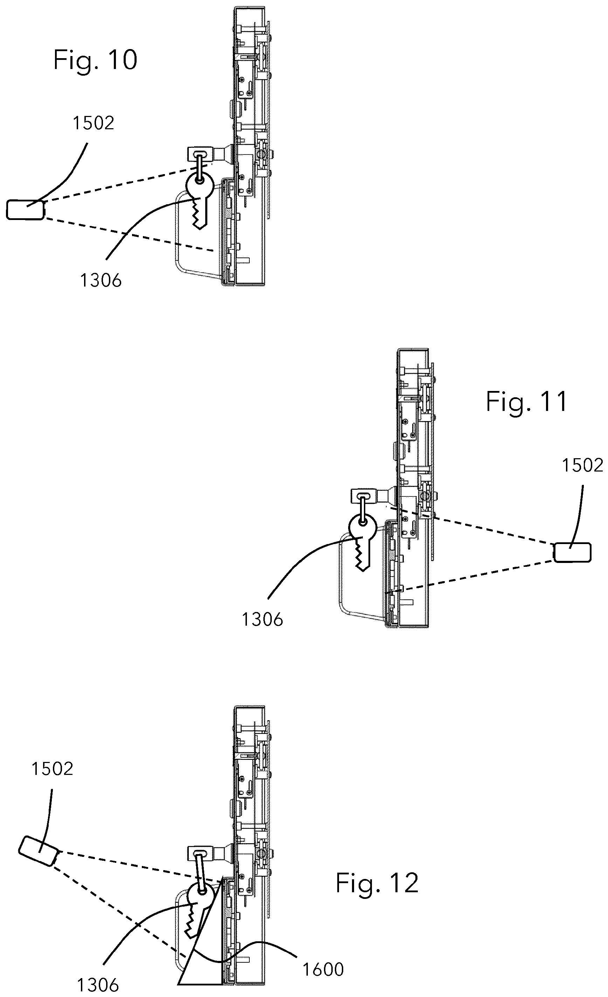

Referring to Figure 10, the visual sensor 1502 is positioned directly in front of the area where the key is positioned (below the fob).

Referring to Figure 11, the visual sensor 1502 is positioned directly behind the area where the key is positioned (below the fob). Various components will be moved / made transparent to enable this.

Referring to Figure 12, the key fob receiving apparatus 1300 comprises a key contact surface 1600 below the fob receptacle. The surface is angled to the vertical such that the key 1306 rests on it to aid with stability and hence visual analysis. The visual sensor 1502 is positioned directly in front of the area where the key is positioned (below the fob), and in this case angled normal to the surface 1306 (although this is not essential).

### Variations

The invention is applicable to key systems, but may be used in other applications, for example:

- Cabinets and locker systems to sense items, both upon entry / exit and whether the volume in question is occupied by an item.

- Doorways, dock doors, entrances & lifts to sense people and / or items.

- Vehicles with or without doors and convertibles to sense unauthorised attempted access.

- Home intruder systems.

- Cabinets or storage spaces with or without doors.

- Intelligent racking/smart storage bins. In one embodiment, a system may prevent human picking errors. Such a system would be applied to each of a plurality of picking areas or zones. In an accessible state, IR beams would turn off (or not produce an alert) to permit access, and a visible green light would turn on. In an inaccessible state, a visible red light would be on and the system would be configured to detect unauthorised picking activity to produce an alert should the IR beams be broken.

- Access control systems without physical doors where red and green lights (or walls of light) are used to show a blanket of colour for areas where doors are a nuisance e.g. hospitals. Instead of locking doors, a light system could be used to grant or deny access. When a green lightis active access is permitted and the system would not prduce an alert. When a red light is active if anyone crosses the beams (passes through the doorway) an alert would be produced.

**Claims**

1. An object detection apparatus (1200) comprising:

   a plurality of emitters (TX1, TX2...) configured to emit light;
   a plurality of detectors (RX1, RX2...) configured to detect light; and,
   a controller (1224);
   wherein
   the emitters and detectors arranged such that the light to be detected crosses a detection space (1212);
   the emitters and detectors each have an optical axis, wherein the emitters and detectors are arranged such that their optical axes are parallel and offset;
   each emitter and detector is part of more than one emitter / detector pair; and,
   **characterised in that** the controller (1224) is configured to detect the presence of an object in the detection space by activating the detectors and emitters in turn to cycle through emitter / detector pairs to determine the presence of an object in the detection space.

2. An object detection apparatus (1200) according to claim 1, wherein the controller is configured to cycle through:

   at least two of the plurality of emitters (TX1, TX2...) whilst monitoring one of the plurality of detectors; or,
   at least two of the plurality of detectors (RX1, RX2...) whilst monitoring one of the plurality of emitters.

3. An object detection apparatus (1200) according to any preceding claim, wherein the plurality of detectors is mounted on a first member (1206) on a first side of the detection space (1212), and the plurality of emitters is mounted on a second member (1208) on a second side of the detection space (1212).

4. An object detection apparatus (1200) according to any preceding claim, wherein the distance between each detector and at least two closest emitters is the same.

5. An object detection apparatus (1200) according to claim 3 or 4, comprising a third member (1210) positioned on the opposite side of the second member to the first member, wherein a further detection space (1214) is defined between the second member and the third member, and wherein a further plurality of emitters is located on the second member, and a further plurality of detectors is located on the third member, and the controller is configured to detect the presence of an object in the further detection space by using each of the further plurality of detectors to detect light emitted by at least two of the further plurality of emitters.

6. An object detection apparatus (1200) according to any preceding claim, wherein the controller is configured to detect the presence of an object in the detection space by using each of the plurality of detectors to detect light emitted by adjacent emitters of the plurality of emitters.

7. An object detection apparatus (1200) according to any preceding claim, comprising a visual sensor configured to generate an image of the object in the detection space.

8. An object detection apparatus (1200) according to claim 7, wherein the visual sensor is activated upon detection of an object by the emitters and detectors.

9. An object detection apparatus (1200) according to claim 7 or 8, comprising a computer comprising software configured to analyse the generated image and to determine whether the detected object meets at least one predetermined criterion.

10. An object detection apparatus (1200) according to claim 9, wherein the at least one predetermined criterion includes at least one of:

object shape;
object size;
object colour.

11. A key storage apparatus (1200) comprising:

a key mount for mounting a key such that the key hangs;
an object detection apparatus according to any preceding claim, the detection space positioned below the key mount such that the apparatus can detect the presence or absence of a key attached to the key mount.

12. A key storage apparatus (1200) according to claim 11, wherein the key mount is a key fob receptacle.

13. A key storage apparatus (1200) according to claim 12, wherein the key fob receptable comprises a fob detector for detecting the presence or absence of a key fob.

14. A key storage apparatus (1300) according to claim 13, comprising a controller, wherein the presence of a key or set of keys is verified by both the fob detector and the object detection apparatus.

15. A method of detecting the presence or absence of an object, the method comprising the steps of:

providing a plurality of light emitters (TX1, TX2...);
providing a plurality of light detectors (RX1, RX2...);
the emitters and detectors arranged such that light to be detected crosses a detection space (1212); wherein
the emitters and detectors each have an optical axis, wherein the emitters and detectors are arranged such that their optical axes are parallel and offset;
each emitter and detector is part of more than one emitter / detector pair; and,
**characterised by** using each of the plurality of detectors to detect light emitted by at least two of the plurality of light emitters by monitoring an output signal of the respective detector and using the at least two light emitters to emit light and by cycling through emitter / detector pairs in turn to determine the presence of an objection in the detection space.

**Patentansprüche**

1. Objektdetektionsvorrichtung (1200), umfassend:

eine Vielzahl von Sendern (TX1, TX2...), die dazu konfiguriert sind, Licht abzugeben;
eine Vielzahl von Detektoren (RX1, RX2...), die dazu konfiguriert sind, Licht zu detektieren; und
ein Steuergerät (1224);
wobei
die Sender und Detektoren derart eingerichtet sind, dass das zu detektierende Licht einen Detektionsraum (1212) durchquert;
die Sender und Detektoren jeweils eine optische Achse aufweisen, wobei die Sender und Detektoren derart eingerichtet sind, dass ihre optischen Achsen parallel und versetzt sind;
jeder Sender und Detektor Teil eines Sender/Detektor-Paars ist; und
**dadurch gekennzeichnet, dass** das Steuergerät (1224) dazu konfiguriert ist, das Vorhandensein eines Objekts in dem Detektionsraum zu detektieren, indem es die Detektoren und Sender der Reihe nach aktiviert, um die Sender/Detektor-Paare durchzugehen, um das Vorhandensein eines Objekts in dem Detektionsraum zu bestimmen.

2. Objektdetektionsvorrichtung (1200) nach Anspruch 1, wobei das Steuergerät dazu konfiguriert ist, durchzugehen durch:

mindestens zwei der Vielzahl von Sendern (TX1, TX2...), während es einen der Vielzahl von Detektoren überwacht; oder

mindestens zwei der Vielzahl von Detektoren (RX1, RX2...), während es einen der Vielzahl von Sendern überwacht.

3. Objektdetektionsvorrichtung (1200) nach einem der vorhergehenden Ansprüche, wobei die Vielzahl von Detektoren an einem ersten Element (1206) auf einer ersten Seite des Detektionsraums (1212) montiert ist, und die Vielzahl von Sendern an einem zweiten Element (1208) auf einer zweiten Seite des Detektionsraums (1212) montiert ist.

4. Objektdetektionsvorrichtung (1200) nach einem der vorhergehenden Ansprüche, wobei der Abstand zwischen jedem Detektor und mindestens zwei nächstgelegenen Sendern der gleiche ist.

5. Objektdetektionsvorrichtung (1200) nach Anspruch 3 oder 4, umfassend ein drittes Element (1210), das auf der Seite des zweiten Elements, die dem ersten Element gegenüberliegt, positioniert ist. wobei ein weiterer Detektionsraum (1214) zwischen dem zweiten Element und dem dritten Element definiert ist, und wobei sich eine weitere Vielzahl von Sendern an dem zweiten Element befindet, und sich eine weitere Vielzahl von Detektoren an dem dritten Element befindet, und das Steuergerät dazu konfiguriert ist, das Vorhandensein eines Objekts in dem weiteren Detektionsraum zu detektieren, indem es jeden der weiteren Vielzahl von Detektoren verwendet, um Licht zu detektieren, das von mindestens zweien der weiteren Vielzahl von Sendern abgegeben wird.

6. Objektdetektionsvorrichtung (1200) nach einem der vorhergehenden Ansprüche, wobei das Steuergerät dazu konfiguriert ist, das Vorhandensein eines Objekts in dem Detektionsraum zu detektieren, indem es jeden der Vielzahl von Detektoren dazu verwendet, Licht zu detektieren, das von angrenzenden Sendern der Vielzahl von Sendern abgegeben wird.

7. Objektdetektionsvorrichtung (1200) nach einem der vorhergehenden Ansprüche, umfassend einen visuellen Sensor, der dazu konfiguriert ist, ein Bild des Objekts in dem Detektionsraum zu generieren.

8. Objektdetektionsvorrichtung (1200) nach Anspruch 7, wobei der visuelle Sensor bei der Detektion eines Objekts durch die Sender und Detektoren aktiviert wird.

9. Objektdetektionsvorrichtung (1200) nach Anspruch 7 oder 8, umfassend einen Computer, der eine Software umfasst, die dazu konfiguriert ist, das generierte Bild zu analysieren und zu bestimmen, ob das detektierte Objekt mindestens ein vorbestimmtes Kriterium erfüllt.

10. Objektdetektionsvorrichtung (1200) nach Anspruch 9, wobei das mindestens eine vorbestimmte Kriterium mindestens eines umfasst von:

   Objektform;
   Objektgröße;
   Objektfarbe.

11. Schlüsselaufbewahrungsvorrichtung (1200), umfassend:

   einen Schlüsselhalter, um einen Schlüssel derart zu montieren, dass der Schlüssel aufgehängt ist;
   eine Objektdetektionsvorrichtung nach einem der vorhergehenden Ansprüche, wobei der Detektionsraum unterhalb des Schlüsselhalters positioniert ist, so dass die Vorrichtung das Vorhandensein oder Fehlen eines Schlüssels, der an dem Schlüsselhalter angebracht ist, detektieren kann.

12. Schlüsselaufbewahrungsvorrichtung (1200) nach Anspruch 11, wobei der Schlüsselhalter ein Schlüsselringbehälter ist.

13. Schlüsselaufbewahrungsvorrichtung (1200) nach Anspruch 12, wobei der Schlüsselringbehälter einen Schlüsselringdetektor umfasst, um das Vorhandensein oder Fehlen eines Schlüsselrings zu detektieren.

14. Schlüsselaufbewahrungsvorrichtung (1300) nach Anspruch 13, umfassend ein Steuergerät, wobei das Vorhandensein eines Schlüssels oder eines Schlüsselbundes sowohl durch den Schlüsselringdetektor als auch durch die Objektdetektionsvorrichtung überprüft wird.

15. Verfahren zum Detektieren des Vorhandenseins oder Fehlens eines Objekts, wobei das Verfahren folgende Schritte umfasst:

Bereitstellen einer Vielzahl von Lichtsendern (TX1, TX2...);
Bereitstellen einer Vielzahl von Lichtdetektoren (RX1, RX2...);
wobei die Sender und Detektoren derart eingerichtet sind, dass das zu detektierende Licht einen Detektionsraum (1212) durchquert;
wobei
die Sender und Detektoren jeweils eine optische Achse aufweisen, wobei die Sender und Detektoren derart eingerichtet sind, dass ihre optischen Achsen parallel und versetzt sind;
jeder Sender und Detektor Teil von mehr als einem Sender/Detektor-Paar ist; und
**gekennzeichnet durch** die Verwendung jedes der Vielzahl von Detektoren, um Licht zu detektieren, das von mindestens zweien der Vielzahl von Lichtsendern abgegeben wird, indem ein Ausgabesignal des jeweiligen Detektors überwacht wird und die mindestens zwei Lichtsender zum Abgeben von Licht verwendet werden, und indem die Sender/Detektor-Paare nacheinander durchgegangen werden, um das Vorhandensein eines Objekts in dem Detektionsraum zu bestimmen.


## Revendications

1. Appareil de détection d'objet (1200), comprenant :

   une pluralité d'émetteurs (TX1, TX2...) configurés pour émettre de la lumière ;
   une pluralité de détecteurs (RX1, RX2...) configurés pour détecter de la lumière ; et
   un contrôleur (1224) ;
   dans lequel
   les émetteurs et détecteurs sont agencés de telle sorte que la lumière à détecter traverse un espace de détection (1212) ;
   les émetteurs et détecteurs présentent chacun un axe optique, les émetteurs et détecteurs étant agencés de telle sorte que leurs axes optiques soient parallèles et décalés ;
   chaque émetteur et détecteur fait partie de plus d'une paire émetteur/détecteur ; et
   **caractérisé en ce que** le contrôleur (1224) est configuré pour détecter la présence d'un objet dans l'espace de détection en activant les détecteurs et émetteurs à tour de rôle pour faire défiler les paires émetteur/détecteur afin de déterminer la présence d'un objet dans l'espace de détection.

2. Appareil de détection d'objet (1200) selon la revendication 1, dans lequel le contrôleur est configuré pour faire défiler :

   au moins deux de la pluralité d'émetteurs (TX1, TX2...) tout en surveillant l'un de la pluralité de détecteurs ; ou,
   au moins deux de la pluralité de détecteurs (RX1, RX2...) tout en surveillant l'un de la pluralité d'émetteurs.

3. Appareil de détection d'objet (1200) selon l'une quelconque des revendications précédentes, dans lequel la pluralité de détecteurs est montée sur un premier élément (1206) sur un premier côté de l'espace de détection (1212), et la pluralité d'émetteurs est montée sur un deuxième élément (1208) sur un deuxième côté de l'espace de détection (1212).

4. Appareil de détection d'objet (1200) selon l'une quelconque des revendications précédentes, dans lequel la distance entre chaque détecteur et au moins deux émetteurs les plus proches est la même.

5. Appareil de détection d'objet (1200) selon la revendication 3 ou 4, comprenant un troisième élément (1210) positionné sur le côté du deuxième élément opposé au premier élément,
   dans lequel un autre espace de détection (1214) est défini entre le deuxième élément et le troisième élément, et dans lequel une autre pluralité d'émetteurs se trouve sur le deuxième élément, et une autre pluralité de détecteurs se trouve sur le troisième élément, et le contrôleur est configuré pour détecter la présence d'un objet dans l'autre espace de détection en utilisant chacun de l'autre pluralité de détecteurs pour détecter la lumière émise par au moins deux de l'autre pluralité d'émetteurs.

6. Appareil de détection d'objet (1200) selon l'une quelconque des revendications précédentes, dans lequel le contrôleur est configuré pour détecter la présence d'un objet dans l'espace de détection en utilisant chacun de la pluralité de détecteurs pour détecter la lumière émise par des émetteurs adjacents de la pluralité d'émetteurs.

7. Appareil de détection d'objet (1200) selon l'une quelconque des revendications précédentes, comprenant un capteur visuel configuré pour générer une image de l'objet dans l'espace de détection.

8. Appareil de détection d'objet (1200) selon la revendication 7, dans lequel le capteur visuel est activé lors de la détection d'un objet par les émetteurs et détecteurs.

9. Appareil de détection d'objet (1200) selon la revendication 7 ou 8, comprenant un ordinateur comprenant un logiciel configuré pour analyser l'image générée et pour déterminer si l'objet détecté satisfait au moins un critère prédéterminé.

10. Appareil de détection d'objet (1200) selon la revendication 9, dans lequel ledit au moins un critère prédéterminé comprend au moins un élément parmi :

> la forme d'objet ;
> la taille d'objet ;
> la couleur d'objet.

11. Appareil de stockage de clé (1200), comprenant :

> un support de clé pour monter une clé de sorte que la clé soit accrochée ;
> un appareil de détection d'objet selon l'une quelconque des revendications précédentes, l'espace de détection étant positionné au-dessous du support de clé de sorte que l'appareil peut détecter la présence ou l'absence d'une clé attachée au support de clé.

12. Appareil de stockage de clé (1200) selon la revendication 11, dans lequel le support de clé est un récipient de porte-clés.

13. Appareil de stockage de clé (1200) selon la revendication 12, dans lequel le récipient de porte-clés comprend un détecteur de porte-clés pour détecter la présence ou l'absence d'un porte-clés.

14. Appareil de stockage de clé (1300) selon la revendication 13, comprenant un contrôleur,
dans lequel la présence d'une clé ou d'un jeu de clés est vérifiée à la fois par le détecteur de porte-clés et l'appareil de détection d'objet.

15. Procédé permettant de détecter la présence ou l'absence d'un objet, le procédé comprenant les étapes consistant à :

> fournir une pluralité d'émetteurs de lumière (TX1, TX2...) ;
> fournir une pluralité de détecteurs de lumière (RX1, RX2...) ;
> les émetteurs et détecteurs étant agencés de telle sorte que la lumière à détecter traverse un espace de détection (1212) ;
> dans lequel
> les émetteurs et détecteurs présentent chacun un axe optique, les émetteurs et détecteurs étant agencés de telle sorte que leurs axes optiques soient parallèles et décalés ;
> chaque émetteur et détecteur fait partie de plus d'une paire émetteur/détecteur ; et
> **caractérisé par** l'utilisation de chacun de la pluralité de détecteurs pour détecter la lumière émise par au moins deux de la pluralité d'émetteurs de lumière en surveillant un signal de sortie du détecteur respectif et en utilisant les au moins deux émetteurs de lumière pour émettre de la lumière et en faisant défiler les paires émetteur/détecteur à tour de rôle pour déterminer la présence d'un objet dans l'espace de détection.

1100

S

1102 — 1108 — 1114

1104 — 1110 — 1116

1106 — 1112 — 1118

1120

Fig. 1
PRIOR ART

Fig. 2

1204

1206,
1206a

RX2

RX1

d/2

RX3

RX5

d

1216

RX4

RX6

RX7

RX8

Fig. 3

1204

1208,
1208a

TX2

TX1

TX3

1218

TX4

TX5

TX6

TX7

Fig. 4

Fig. 5

Fig. 6

Fig. 7

Fig. 8a

Fig. 8b

Fig. 9

Fig. 10

1502

1306

Fig. 11

1502

1306

1502

Fig. 12

1306

1600

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2037296 A2

- WO 2021130346 A